(19) **Europäisches Patentamt**
**European Patent Office**
**Office européen des brevets**

(11) **EP 4 166 262 A1**

(12) **EUROPEAN PATENT APPLICATION**

(43) Date of publication:
**19.04.2023 Bulletin 2023/16**

(21) Application number: **22155778.8**

(22) Date of filing: **09.02.2022**

(51) International Patent Classification (IPC):
**B22F 10/14** (2021.01)      **B33Y 10/00** (2015.01)
**C22C 1/05** (2023.01)      **C22C 29/02** (2006.01)
**B33Y 80/00** (2015.01)      **B22F 5/00** (2006.01)

(52) Cooperative Patent Classification (CPC):
**B22F 10/14; B33Y 10/00; B33Y 80/00;**
**C22C 1/051; C22C 29/02;** B22F 2005/001;
B22F 2302/10

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **15.10.2021 EP 21202919**

(71) Applicant: **Sandvik Machining Solutions AB**
**811 81 Sandviken (SE)**

(72) Inventor: **GYLLENFLYKT, Tobias**
**811 81 Sandviken (SE)**

(74) Representative: **Sandvik**
**Sandvik Intellectual Property AB**
**811 81 Sandviken (SE)**

Remarks:
The reference to the drawing no. 5C is deemed to be
deleted (Rule 56(4) EPC).

(54) **A METHOD FOR MANUFACTURING A SINTERED ARTICLE AND A SINTERED ARTICLE**

(57) Disclosed is a method for additively manufacturing a sintered article from a powder composition comprising granules of cemented carbide or cermet. The method comprises the steps of additively manufacturing (102) a bottom portion by depositing a plurality of layers of powder composition, and adding binder to the entire surface of each layer of the bottom portion. The method further comprises additively manufacturing (104) a middle portion by depositing a plurality of layers of powder composition, and adding binder to only the outer parts of each layer of the middle portion. The method further comprises additively manufacturing (106) a top portion by depositing a plurality of layers of powder composition, and adding binder to the entire surface of each layer of the top portion, thereby producing a printed article, and sintering (108) the printed article, wherein the porosity of the granules in the powder is 0 - 15 wt%.

Additively manufacturing a bottom portion by depositing a plurality of layers of powder composition, and adding binder to the entire surface of each layer of the bottom portion; — 102

Additively manufacturing a middle portion by depositing a plurality of layers of powder composition, and adding binder to only the outer parts of each layer of the middle portion; — 104

Additively manufacturing a top portion by depositing a plurality of layers of powder composition, and adding binder to the entire surface of each layer of the top portion, thereby producing a printed article — 106

Sintering the printed article — 108

Removing each bottom portion, top portion, and the outer parts of each middle portion — 110

Fig. 1

EP 4 166 262 A1

## Description

<u>Technical field</u>

The present disclosure relates generally to methods for manufacturing a sintered article, and a sintered article.

<u>Background</u>

Additive manufacturing, also known as 3D additively manufacturing, generally involves additively manufacturing an articulate one layer at a time using specialized systems. In particular, a layer of material may be deposited on the working surface of a build chamber and bonded with another layer of the same or of a different material. Additive manufacturing may be used to manufacture articles from computer-aided design models using techniques such as powder bed fusion (PBF), direct metal laser sintering (DMLS) or binder jet 3D additively manufacturing.

Additive manufacturing of cemented carbide or cermet bodies are preferably done by a 3D additively manufacturing technique that first creates a green body after which the green body is sintered in a separate furnace. Binder jetting is the most common form of such 3D additively manufacturing techniques.

In binder jetting, one layer of powder is deposited on the working surface of the build chamber, and then a liquid binding agent, i.e. a binder, is added to the powder in order to fuse the powder particles together.

It would be beneficial if the material properties of cemented carbide or cermet articles, produced using additive manufacturing technologies such as binder jetting, would be more similar to that of a compacted article of cement or cemented carbide manufactured using traditional manufacturing technologies.

Consequently, there exists a need for improvement when it comes to methods for producing sintered articles using binder jetting.

<u>Summary</u>

It is an object of the invention to address at least some of the problems and issues outlined above. An object of embodiments of the invention is to manufacture articles with desired material properties, at least in terms of having less and/or smaller areas with accumulations of metallic binder phase than traditional methods of binder jetting.

According to one aspect, a method for additively manufacturing a sintered article from a powder composition comprising granules of cemented carbide or cermet, is provided. The method comprises a) additively manufacturing a bottom portion by depositing a plurality of layers of powder composition, and adding binder to the entire surface of each layer of the bottom portion and b) additively manufacturing a middle portion by depositing a plurality of layers of powder composition, and adding binder to only the outer parts of each layer of the middle portion. The method further comprises c) additively manufacturing a top portion by depositing a plurality of layers of powder composition, and adding binder to the entire surface of each layer of the top portion, thereby producing a printed article, and d) sintering the printed article, wherein the porosity of the granules of the powder is 0 - 15 wt%.

According to another aspect, an article manufactured using methods as described herein is also provided.

Further possible features and benefits of this solution will become apparent from the detailed description below.

<u>Brief description of drawings</u>

The solution will now be described in more detail by means of exemplary embodiments and with reference to the accompanying drawings, in which:

Fig. 1 is a flow diagram of a method according to an embodiment.

Fig. 2 shows an article according to a first embodiment.

Fig. 3 shows a print layer of a middle portion of an article according to an embodiment.

Fig. 4 shows an article according to a second embodiment.

Figs. 5A-5C show the microstructure of an article according to an embodiment.

<u>Detailed description</u>

Briefly described, the present disclosure provides a method for additively manufacturing a sintered article, for example using binder jetting, wherein a shell structure comprising both powder and binder surrounds a loose powder composition without added binder. The shell structure is achieved by providing a bottom portion and a top portion of the article using the same procedure as normal binder jetting, wherein binder is added to the entirety of each layer, and providing a middle portion wherein binder is added only to the outer parts of each layer. The parts of the printed article where binder has been added, i.e. the bottom portion, the top portion and the outer parts of the middle portion, form the shell structure around the loose powder in the middle. The printed article is then sintered, and the properties of the resulting article are such that the sintered article comprises a more even distribution of metallic binder phase and hard phase, e.g. WC phase in cemented carbide, in at least the middle portion of the sintered article. The porosity of the granules in the powder used is in the range of 0 - 15 wt%.

The method may in some embodiments be performed such that only selected parts of the article are manufactured using the shell structure. In some embodiments, such selected parts may be engagement regions of the finished article.

The method is primarily applicable for binder jetting techniques for producing cemented carbide or cermet articles.

For the purpose of this disclosure, a region or portion of the article with no binder added is defined as a region of the sintered article or green article, in which no binder was added during the additive manufacturing steps. Further, a region with binder added is defined as a region of the sintered article or green article, in which binder was added during the additive manufacturing steps. Thus, even if no binder is present in the sintered article, e.g. due to being removed during the sintering step, the regions may still be referred to as regions or portions without binder added and regions or portions with binder added.

The term "cermet" is herein intended to denote a material comprising hard constituents in a metallic binder phase, wherein the hard constituents comprise carbides or carbonitrides of one or more of Ta, Ti, Nb, Cr, Hf, V, Mo and Zr, such as TiN, TiC and/or TiCN.

The term "cemented carbide" is herein intended to denote a material comprising hard constituents in a metallic binder phase, wherein the hard constituents comprise at least 50 wt% WC grains. The hard constituents can also comprise carbides or carbonitrides of one or more of Ta, Ti, Nb, Cr, Hf, V, Mo and Zr, such as TiN, TiC and/or TiCN.

The metallic binder phase in the cermet or in the cemented carbide is a metal or a metallic alloy, and the metal can for example be selected from Cr, Mo, Fe, Co or Ni alone or in any combination. Preferably the metallic binder phase comprises a combination of Co, Ni and Fe, a combination of Co and Ni, or Co. After sintering, the metallic binder phase can, depending on the overall composition of the cemented carbide or cermet, also comprise other elements that is dissolved in the binder during sintering, e.g. W, Ta, Ti, Nb, Cr, Hf, V, Mo and Zr. The average content of metallic binder phase in the powder is 4-30 wt%, preferably 6-17 wt% or 8-13 wt%.

In conventional production of cemented carbide or cermet bodies, using milling, spray drying, pressing and sintering, the powder used in the pressing is not sintered. However, for additive manufacturing, such a powder is too fragile and also too porous. Therefore, the dried powder in the form of granules is sintered to different degrees when used in additive manufacturing, and thus the powder used comprises sintered granules.

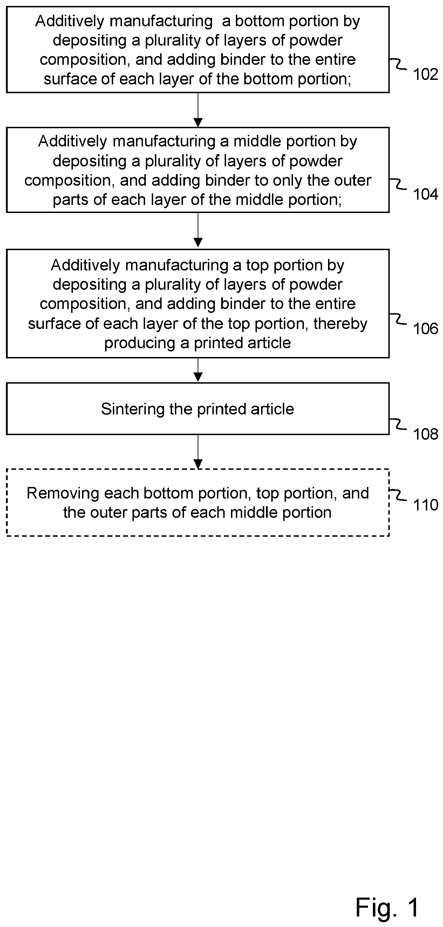

Looking now at Fig. 1, steps of a method for manufacturing a sintered article according to an embodiment will now be described in more detail.

The method comprises additively manufacturing 102 a bottom portion of an article by depositing a plurality of layers of powder composition and adding binder to the entire surface of each layer. In other words, the first step of additively manufacturing 102 the bottom portion comprises using conventional binder jetting technique.

The method further comprises additively manufacturing 104 a middle portion by depositing a plurality of layers of powder composition and adding binder to only the outer parts of each layer. In other words, the step of additively manufacturing 104 a middle portion differs from conventional binder jetting technique in that the binder is not added to the entire layer of powder composition, and the resulting middle portion comprises loose powder surrounded by walls formed out of powder mixed with binder.

The method further comprises additively manufacturing 106 a top portion using the same steps as when additively manufacturing 102 the top portion, i.e. it comprises depositing a plurality of layers of powder composition and adding binder to the entire surface of each layer.

After the additively manufacturing steps 102, 104, 106 have been performed, a printed article, also called a green body, is obtained. The printed article comprises an interior comprised of loose powder, and an exterior comprised of binder fused powder.

The method further comprises sintering 108 the article, thereby producing a sintered the article.

The present solution may improve known additive manufacturing techniques in several ways.

Firstly, the properties of the resulting sintered article using methods as described herein are better when using a surrounding shell structure, than if traditional binder jetting techniques are used. By using methods according to the present disclosure, a sintered article may be obtained, the properties of which are more similar those of a pressed cemented carbide or cermet article. Preferably, the microstructure of the sintered article is such that there are no regions with an uneven distribution between cobalt phase and WC phase, or at least a relatively uniform distribution, particularly such that there are no regions with large accumulations of cobalt. Further, a sintered article manufactured using the methods described herein have a higher hardness than articles manufactured using traditional additive manufacturing techniques.

Secondly, since there is less binder to remove, and that the binder is positioned in the outer parts of the article, the debinding step of the sintering can be performed faster than in traditional binder jetting methods, Further, since there is no binder in the middle of the article, the risk of the article breaking during debinding is reduced.

Furthermore, by using methods according to the present disclosure, it may be possible to manufacture articles using powders with lower content of metallic binder phase than what is possible using traditional methods. When using powder with too low contents of metallic binder phase, the porosity of the sintered articles may become too high, but by using a shell structure around loose powder rather than having binder in the entire article, the porosity may be decreased, when enables manufacturing of articles using powders with lower metallic binder phase content.

It has been discovered during testing that the methods as described herein are especially suitable for powder with certain compositions, such as cemented carbide powder comprising granules with a relatively low porosity, up to 15 wt%. Powders used for the purpose of the present disclosure may also comprise a relatively low degree of metallic binder phase, especially when the metallic binder phase is cobalt.

In some embodiments, the powder composition comprises cobalt as metallic binder phase, and the cobalt content is 7 - 13%. In some embodiments, the cobalt content is 8 - 12 %. In some embodiments, the cobalt content is 9 - 11%. In some embodiments, the cobalt content is 9.5 - 10.5 %.

In some embodiments, the porosity of granules in the powder used is in the range of 0 - 10 wt%, in some embodiments 0 - 5 wt%, and in some embodiments it is in the range of 0 - 3 wt%. Having a lower porosity in the granules of the powder is generally advantageous for achieving a sintered article with desired materials properties, such as low porosity and low sizes of metallic binder phase accumulation areas.

For the purpose of methods and articles according to the present disclosure, any binder suitable for printing cemented carbide or cermet may be used.

In some embodiments, the binder used is a water-soluble thermoset binder comprising a compound A being at least one organic, non-aromatic substance, comprising at least two hydroxyl groups and a compound B being at least one organic, non-aromatic substance, comprising at least two carboxyl groups, wherein the compound A and compound B are monomers or oligomers. Such a binder may have a relatively strong adhesive effect, and can thus be used advantageously in methods according to the present disclosure, such that the areas with binder added can be smaller than with conventional binders.

In some embodiments, compound A is selected from propylene glycol, glycerol, maltodextrin, erythritol, xylitol, sorbitol and mannitol. In some embodiments, compound B is selected from citric acid, tartaric acid, succinic acid, fumaric acid, maleic acid, polyacrylic acid oligomer and carballylic acid.

Further, it has also been discovered that the methods as described herein may be especially suitable when using certain types of sintering.

In some embodiments, the sintering comprises using vacuum sintering. For the purpose of the disclosure, vacuum sintering can comprise sintering in a low vacuum with pressure up to 1013 mbar. In some embodiments, vacuum sintering comprises sintering at a pressure or partial pressure of up to 500 mbar. In some embodiments, vacuum sintering comprises sintering at a pressure or partial pressure of up to 250 mbar.

In some embodiments, the sintering comprises using vacuum sintering first, and then using high pressure sintering with a pressure of at least 35 bar. Further, in some embodiments, the sintering may comprise a debinding step.

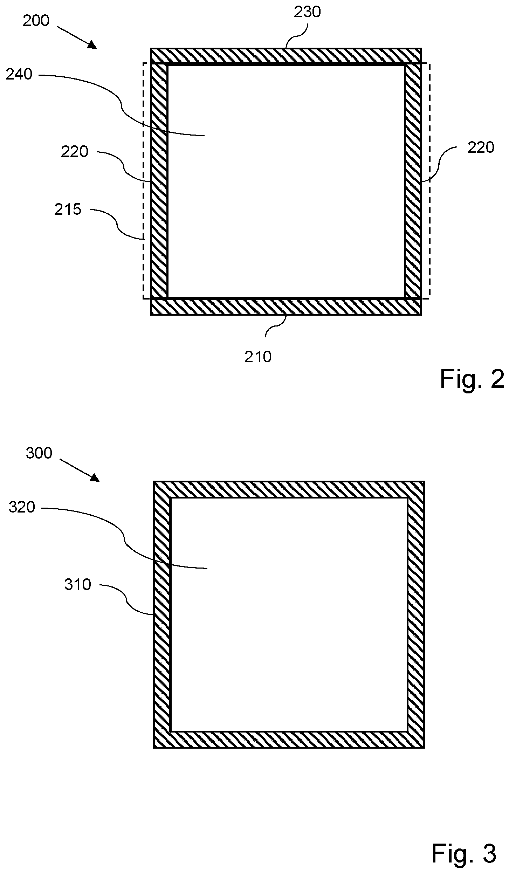

Fig 2 shows a side view of a printed and/or sintered article 200 according to the present disclosure. The article comprises a bottom portion 210, comprising powder with binder added, a top portion 230 comprising powder with binder added, and a middle portion 215 where binder was only added to the outer portions, more specifically (enclosed by a dashed line not representing a physical structure) comprising two side portions 220 with a similar structure as the top and bottom portions 210, 230, i.e. powder with binder added, and a center part 240 comprising only loose powder, without binder added.

To connect this to the previously describe method steps, step 102 is performed for additively manufacturing the bottom portion 210, step 104 is performed for additively manufacturing the middle portion 215 comprising the two side portions 220 and the center part 240, and step 106 is performed for additively manufacturing the top portion 230.

In some embodiments, after the product has been sintered, the outer portions 210, 220, 230 may be removed, such that the remaining article only comprises the center part 240, i.e. the part where no binder was added to the powder.

The thickness of the outer parts 210, 220, 230 may vary depending on the article being manufactured. In some embodiments, the thickness of the outer parts 210, 220, 230 is in the range of 0,05 - 0,5 mm.

The thickness may depend on the intended use of the article as well. In case the article is an article intended for engagement during machining e.g. an insert for a cutting tool, the outer parts 210, 220, 230 may be relatively thin in order to be more easily removed afterwards, since the center part 240 of the article is the part of the article having

EP 4 166 262 A1

improved material properties which are desired during machining.

In some embodiments, the method further comprises removing 110 some or all of the outer parts 210, 220, 230 of the article, such that some or all of the middle portion 215 of the article forms the exterior part of the article 200. The removing of the outer parts may be performed e.g. by grinding.

Fig. 3 shows a print layer 300 of the middle portion 215 of Fig. 2, seen from above. The print layer comprises outer portions 310, wherein binder is added, and a middle portion 320 wherein no binder is added. As described above, the print layer 300 is manufactured using method step 104, i.e. by depositing a layer of powder composition and adding binder only to the outer parts 310 of the layer.

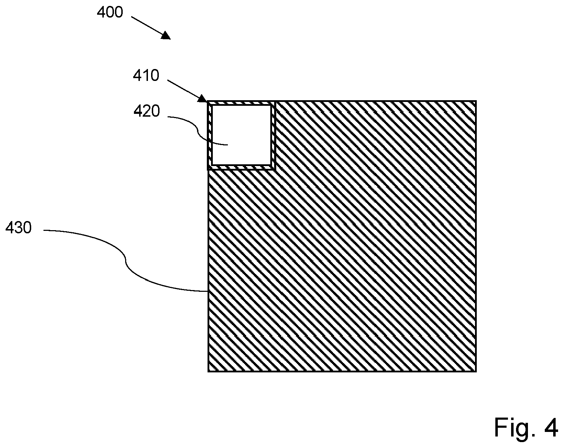

Fig. 4 shows a side view of a printed and/or sintered article 400 according to an embodiment, where only a selected part 410 of the article 400 is manufactured by using a shell structure surrounding a volume with loose powder 420. The remaining part 430, which is a majority of the total volume of the article 400, referred to as the bulk portion 430, is comprised of a combination of powder and binder.

The selected part 410 of Fig. 4 has the same structure as the article 200 of Fig. 2, i.e. it comprises an interior volume 420, comprising loose powder without any added binder, and a surrounding shell structure. As can be seen from the image, the portions of the selected part 200 which constitute the rightmost portion and the bottom portion may also be seen as being a part of the bulk 430.

By using the shell structure for only a selected part of the article, it may be possible to achieve an article which has a higher green body strength, and which is therefore easier to transport and handle, which is needed between the additively manufacturing stage and the sintering stage. Another advantage may result from that the parts comprising both powder and binder shrink in another way than the parts comprising only loose powder. Therefore, by only using the shell structure around a selected, relatively small portion of the entire article, an article may be achieved which exhibits more uniform shrinking than one where the entire article is surrounded by a shell structure.

Thus, in some embodiments, the method comprises manufacturing only a part of the article using steps 202, 204 and 206, and manufacturing the remaining article by depositing a layer of powder composition and adding binder to the entire layer of powder composition.

In some embodiments, the method comprises manufacturing a plurality of parts using steps 202, 204 and 206, and manufacturing the remaining article by depositing a layer of powder composition and adding binder to the entire layer of powder composition.

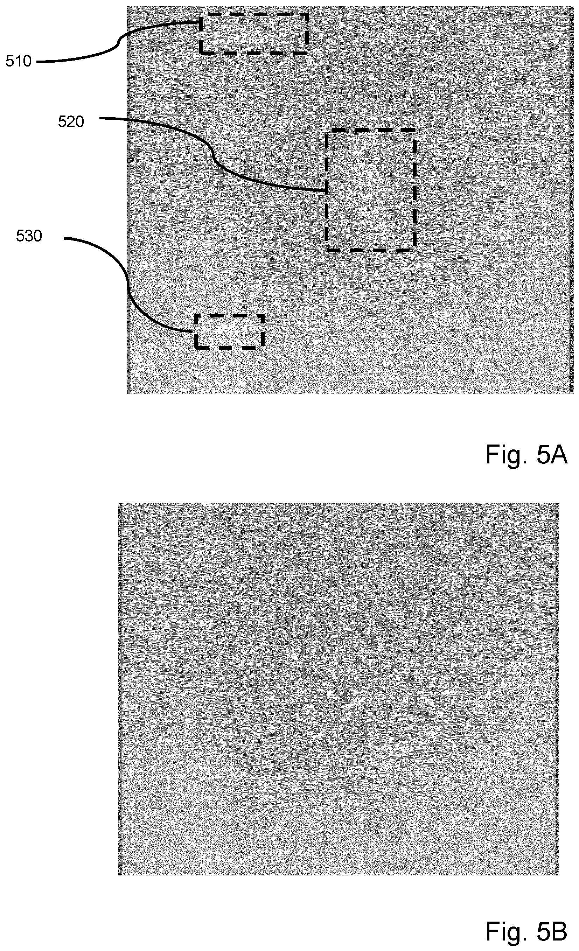

Looking now at Figs. 5A and 5B, the difference in microstructure that can be achieved by employing methods according to the present disclosure will now be described. As described previously, it is preferable with a relatively uniform distribution between hard phase and metallic binder phase phase, such that there are no large accumulations of metallic binder phase in the finished sintered article.

In a finished sintered article, manufactured by using methods as described herein, the microstructure of the article is generally better in the region with no binder added to the powder, i.e. in the center of the article. Fig. 5A shows the microstructure in the center of an article manufactured using traditional methods, i.e. where binder is added to the entirety of each print layer, and Fig. 5B shows the microstructure in the center of an article manufactured using a shell structure. The lighter areas on the figures represent metallic binder phase, such as cobalt, and the darker areas represent the hard phase, such as WC.

Looking now at Fig. 5A, showing an article manufactured using binder in the entirety of each print layer, the article has several areas with relatively large accumulations of metallic binder phase 510, 520, 530, which may be referred to as metallic binder phase accumulation areas. These areas 510, 520, 530 are comprised of mostly metallic binder phase and virtually no hard phase, and may have a negative impact on the microstructure of the article.

Looking now at Fig. 5B, showing an article manufactured using binder only in the outer parts of each print layer, the distribution between metallic binder phase and hard phase is relatively uniform. It can still be seen that some parts of the image is brighter than other parts, but overall the structure is relatively uniform, and clearly more uniform than the portions shown in Fig. 5A.

Figs. 5A and 5B show that the distribution of metallic binder phase and hard phase is better in the regions in which no binder was added, than in the areas where binder was added, which is one of the key insights underlying the present disclosure.

## Performed tests

A number of tests were performed for comparing articles manufactured using methods according to the present disclosure, using different powder compositions and different sintering methods. The resulting articles were then analyzed using a method for determining homogeneity of the microstructure, by determining the average size of the metallic binder phase accumulation areas. The different sintering methods used and the analyze method used will first be described, and then referenced in the subsequent examples.

**Sintering method A**

The method starts with a debinding step in hydrogen atmosphere which included a stepwise increase in temperature to 550°C for a time of 210 min.

The temperature was then increased under vacuum to 1380 °C where CO and Ar were introduced at a 1:1 flow ratio at 40 mbar partial pressure during a 30min holding time. The temperature was then increased to 1410°C. The temperature and CO/Ar atmosphere were maintained for 60 min. After that controlled cooling down to 1200°C was applied before the furnace was let to free cooling down to room temperature.

**Sintering method B**

The method starts with a debinding step in hydrogen atmosphere which included a stepwise increase in temperature to 550°C for a time of 220 min.

The temperature was then increased under vacuum to 1380 °C where CO and Ar were introduced at a 1:1 flow ratio at 50 mbar partial pressure during a 45 min holding time. The temperature was then increased to 1410°C. The temperature and CO/Ar atmosphere were maintained for 90 min. After that a pressure of 50 bar Ar was applied for 30 min. The furnace was then subjected to a controlled cooling step down to 1150°C before the furnace was let to free cooling down to room temperature. The 50 bar Ar pressure was maintained for 6h after reaching 1150°C.

**Sintering method C**

The temperature was increased under vacuum to 1380 °C where CO and Ar were introduced at a 1:1 flow ratio at 5mbar partial pressure during a 30 min holding time. The temperature was then increased to 1410°C and the partial pressure was increased to 40 mbar. The temperature and CO/Ar atmosphere were maintained for 60 min. After that a pressure of 50 bar Ar was applied for 30min. The furnace was then subjected to a controlled cooling down to 1150°C before the furnace was let to free cooling down to room temperature. The 50 bar Ar pressure was maintained for 6h after reaching 1150°C.

**Analyze method for microstructure**

The homogeneity of the microstructure was estimated through image analysis on cross section images of the microstructure taken on polished samples. Circles were inscribed in multiple cobalt regions and images. 50 000 to 60 000 regions were analyzed per sample. The weighted average of the inscribed circle diameters was calculated accordingly to equation 1. using the parameters p=6 and q=3. This results is denoted X[6,3] and have the unit $\mu$m. Generally speaking, and for articles and methods as described herein, a lower value of the X[6,3] result is preferable to a higher result.

$$X[p,q] = \left( \frac{\sum_i n_i X_i^p}{\sum_i n_i X_i^q} \right)^{1/(p-q)}$$

Equation 1.

**Porosity measuring method**

The porosity in the sintered granules was measured by image analysis on a LOM (Light optic microscope) image (2000 magnification) on a cross section of a granule using the software Image J. An average of approx. 50 granules was analyzed per powder sample.

**Example 1**

Sintered cemented carbide granules (table 1) were used to print sample cubes (15x15x6mm). The granules were prepared by milling a slurry comprising WC and Co powders, spraydrying the slurry forming granules which is subsequently sintered by vacuum sintering at 1275 °C for 60 minutes to a porosity of about 1-3vol% and the WC powder has an average grain size of 0.8 $\mu$m.

The cubes were produced through binder jet printing. The printing was done using a ExOne Innovent+ with a layer thickness of 50 $\mu$m during the printing. Saturation during the printing was set to 80% and the binder used was ExOne AquaFuse.

For the Reference 1, binder was added through all of the cube as normal binder jet printing. For Invention 1, binder was only applied 0.5mm in from all of the cube sides. Both versions were printed in the same build job.

The printed cubes were sintered first with sintering method A and then method B.

Table 1 - Powder composition

| W [wt%] | Co [wt%] | Cr [wt%] | D10 | D50 | D90 |
|---------|----------|----------|-----|------|------|
| 84.1 | 10 | 0.43 | 7.8 | 18.4 | 32.1 |

Table 2 - Difference in microstructure

| Sample | X[6,3] |
|--------|--------|
| Invention 1 | 1.17 |
| Reference 1 | 2.41 |

As can be seen from Table 2, the average size of the cobalt accumulation areas in the cubes manufactured using the invention is much smaller, less than half compared to the reference.

## Example 2

Sintered cemented carbide granules (table 3) were used to print sample cubes (15x15x6mm). The granules were prepared by milling a slurry comprising WC and Co powders, spraydrying the slurry forming granules which is subsequently sintered by vacuum sintering at 1275 °C for 60 minutes to a porosity of about 1-3vol% and the WC powder has an average grain size of 0.8 $\mu$m.

The cubes were produced through binder jet printing. The printing was done using a ExOne Innovent+ with a layer thickness of 50 $\mu$m during the printing. Saturation during the printing was set to 80% and the binder used was ExOne AquaFuse.

For Invention 1, 2 and 3, binder was only applied 0.5mm in from all the cube sides. Both versions were printed in the same build job.

The printed cubes in Invention 1 were sintered first with sintering method A and then method B. The printed cubes in Invention 2 were sintered first with sintering method A and then method C. The printed cubes in Invention 3 were sintered with method B. The powder composition was the same for Invention 1, 2 and 3

Table 3 - Powder composition

| W [wt%] | Co [wt%] | Cr [wt%] | D10 | D50 | D90 |
|---------|----------|----------|-----|------|------|
| 84.1 | 10 | 0.43 | 7.8 | 18.4 | 32.1 |

Table 4 - Difference in microstructure

| Sample | X[6,3] |
|--------|--------|
| Invention 1 | 1.17 |
| Invention 2 | 1.06 |
| Invention 3 | 0.99 |

As can be seen from Table 4, the cobalt accumulation areas in the cubes manufactured using sintering method B had a smaller average size than those manufactured using first sintering method A and then method B, which in turn had smaller average size than those manufactured using sintering method A and then method B.

**Example 3**

Sintered cemented carbide granules (table 5) were used to print sample cubes (15x15x6mm). The granules were prepared by milling a slurry comprising WC and Co powders, spraydrying the slurry forming granules which is subsequently sintered by vacuum sintering at 1275 °C for 60 minutes to a porosity of about 1-3vol% and the WC powder has an average grain size of 0.8 $\mu$m.

The cubes were produced through binder jet printing. The printing was done using a ExOne Innovent+ with a layer thickness of 50 $\mu$m during the printing. Saturation during the printing was set to 80% and the binder used was ExOne AquaFuse.

For the Reference 2, binder was added through all of the cube as normal binder jet printing. For Invention 4, binder was only applied 0.5mm in from all of the cube sides. Both versions were printed in the same build job. The printed cubes were sintered first with sintering method A and then method C.

Table 5 - Powder composition

| W [wt%] | Co [wt%] | Cr [wt%] | D10 | D50 | D90 |
|---|---|---|---|---|---|
| 81.4 | 13 | 0.56 | 9.8 | 22 | 40.0 |

Table 6 - Difference in microstructure

| Sample | X[6,3] | Hv10 |
|---|---|---|
| Invention 4 | 1.28 | 1482 |
| Reference 2 | 1.43 | 1458 |

As can be seen from Table 6, the cobalt accumulation areas of the cubes manufactured using the invention have smaller average size than those of the reference. Further, the cubes manufactured using the invention have a higher hardness than the reference.

**Example 4**

Sintered cemented carbide granules (table 7) were used to print sample cubes (15x15x6mm). The granules were prepared by milling a slurry comprising WC and Co powders, spraydrying the slurry forming granules which is subsequently sintered by vacuum sintering at 1275 °C for 60 minutes to a porosity of about 1-3vol% and the WC powder has an average grain size of 1.5 $\mu$m.

The cubes were produced through binder jet printing. The printing was done using a ExOne Innovent+ with a layer thickness of 50$\mu$m during the printing. Saturation during the printing was set to 80% and the binder used was ExOne AquaFuse.

For the Reference 3, binder was added through all of the cube as normal binder jet printing. For Invention 5, binder was only applied 0.5mm in from all of the cube sides. Both versions were printed in the same build job. The printed cubes were sintered with sintering method B.

Table 7

| W [wt%] | Co [wt%] | Ta [wt%] | Nb [wt%] | D10 | D50 | D90 |
|---|---|---|---|---|---|---|
| 81.1 | 12 | 1.35 | 0.15 | 8.5 | 19.7 | 35.5 |

Table 8

| Sample | X[6,3] |
|---|---|
| Invention 5 | 1.56 |
| Reference 3 | 2.32 |

As can be seen from Table 8, the average size of the cobalt accumulation areas in the cubes manufactured using the invention is significantly smaller than in the reference.

**Example 5**

This example shows the difference in microstructure (X [6,3]) and hardness (Hv10) between three reference samples and three respective samples using the invention, with the same powder, the powder comprising 10% metallic binder phase in the form of cobalt.

| Batch ID | Sample | Co wt% | Sintering 1 | Sintering 2 | X[6,3] | HV10 |
|---|---|---|---|---|---|---|
| 1 | Reference | 10 | A | B | 2.41 | 1588 |
| 1 | Invention | 10 | A | B | 1.17 | 1597 |
| 2 | Reference | 10 | B | - | 7.62 | 1383 |
| 2 | Invention | 10 | B | - | 0.99 | 1617 |
| 3 | Reference | 10 | A | C | 9.65 | 1483 |
| 3 | Invention | 10 | A | C | 1.06 | 1593 |

As can be seen, for batches 2 and 3, the difference in metallic binder phase accumulation areas were extremely large, to the extent that the reference sample articles were not usable. Even for batch 1 the difference between using the invention and traditional methods were large, though not as great as for batches 2 and 3.

This shows that it may be possible to manufacture articles using powder comprising less content of metallic binder phase, especially when the metallic binder phase is cobalt, than when using traditional manufacturing technologies, and also that the relative advantages of using the invention increases as the cobalt content of the powder decreases, at least in the range from 13% to 10%.

As can be seen from the performed tests, by using methods according to the present disclosure, articles may be manufactured with a better microstructure than is achieved using traditional additive manufacturing techniques.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. Moreover, it is not necessary for a method to address each and every problem sought to be solved by the presently described concept, for it to be encompassed hereby. In the exemplary figures, a broken line generally signifies that the feature within the broken line is optional.

**Claims**

1. A method for additively manufacturing a sintered article from a powder composition comprising granules of cemented carbide or cermet, the method comprising the steps of:

   a) additively manufacturing (102) a bottom portion by depositing a plurality of layers of powder composition, and adding binder to the entire surface of each layer of the bottom portion;
   b) additively manufacturing (104) a middle portion by depositing a plurality of layers of powder composition, and adding binder to only the outer parts of each layer of the middle portion;
   c) additively manufacturing (106) a top portion by depositing a plurality of layers of powder composition, and adding binder to the entire surface of each layer of the top portion, thereby producing a printed article; and
   d) sintering (108) the printed article,

   wherein the porosity of the granules in the powder is 0 - 15 wt%.

2. The method according to claim 1, wherein the porosity of granules in the powder is 0 - 3 wt%.

3. The method according to any one of the previous claims, wherein the powder composition comprises 8 - 14% metallic binder phase.

4. The method according to any one of the previous claims, wherein the powder composition comprises 9.5 - 10.5 wt% metallic binder phase.

5. The method according to any one of the previous claims, wherein the sintering (108) comprises both vacuum sintering and high pressure sintering with a pressure above 35 bar.

6. The method according to any one of the previous claims, wherein the thickness of each portion with binder added is in the range of 0.05 - 0.5 mm.

7. The method according to any one of claims 1-6, wherein part of the article is manufactured using steps a-d of claim 1, and the remaining article is manufactured by depositing a layer of powder composition and adding binder to the entire layer of powder composition.

8. The method according to any one of claims 1-6, wherein the article comprises a plurality of parts manufactured using steps a-d of claim 1, and the remaining article is manufactured by depositing a layer of powder composition and adding binder to the entire layer of powder composition.

9. The method according to any one of the previous claims, wherein the binder is a water-soluble thermoset binder comprising a compound A being at least one organic, non-aromatic substance, comprising at least two hydroxyl groups and a compound B being at least one organic, non-aromatic substance, comprising at least two carboxyl groups, wherein the compound A and compound B are monomers or oligomers.

10. The method according to claim 9, wherein compound A is selected from propylene glycol, glycerol, maltodextrin, erythritol, xylitol, sorbitol and mannitol, and wherein compound B is selected from citric acid, tartaric acid, succinic acid, fumaric acid, maleic acid, polyacrylic acid oligomer and carballylic acid.

11. The method according to any one of the previous claims, further comprising:
removing (110) each bottom portion, top portion, and the outer parts of each middle portion.

12. The method according to any one of the previous claims, wherein the article is a component of a cutting tool or grinding tool for machining.

13. A sintered article (200) manufactured using any one of the previous claims.

14. The sintered article according to claim 13, wherein the article is an article for machining.

15. The article according to any one of claims 13 or 14, wherein the article is a component for a cutting or grinding tool.

Additively manufacturing a bottom portion by depositing a plurality of layers of powder composition, and adding binder to the entire surface of each layer of the bottom portion;

⌐ 102

Additively manufacturing a middle portion by depositing a plurality of layers of powder composition, and adding binder to only the outer parts of each layer of the middle portion;

⌐ 104

Additively manufacturing a top portion by depositing a plurality of layers of powder composition, and adding binder to the entire surface of each layer of the top portion, thereby producing a printed article

⌐ 106

Sintering the printed article

⌐ 108

Removing each bottom portion, top portion, and the outer parts of each middle portion

⌐ 110

Fig. 1

Fig. 2

Fig. 3

400

410

420

430

Fig. 4

510

520

530

Fig. 5A

Fig. 5B

Europäisches
Patentamt

European
Patent Office

Office européen
des brevets

# EUROPEAN SEARCH REPORT

**Application Number**

EP 22 15 5778

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2018/221962 A1 (STOYANOV PANTCHO [US]) 9 August 2018 (2018-08-09) * paragraph [0023] * * claim 1 * * paragraph [0021] * * paragraph [0017] * * figure 2 * | 1-15 | INV. B22F10/14 B33Y10/00 C22C1/05 C22C29/02 B33Y80/00 |
| Y | WO 2021/154253 A1 (HEWLETT PACKARD DEVELOPMENT CO [US]) 5 August 2021 (2021-08-05) * paragraph [0040] - paragraph [0041] * * claims 1-5 * | 1-15 | ADD. B22F5/00 |
| X | KR 102 103 376 B1 (KOREA INST MACH & MATERIALS [KR]) 24 April 2020 (2020-04-24) * figures 4,5 * * abstract * | 13-15 | |
| A | US 2017/072469 A1 (MADERUD CARL-JOHAN [SE] ET AL) 16 March 2017 (2017-03-16) * paragraph [0045] * | 1-15 | |
| A | US 4 610 931 A (NEMETH BELA J [US] ET AL) 9 September 1986 (1986-09-09) * claims 1-35 * * abstract * | 1-15 | TECHNICAL FIELDS SEARCHED (IPC) B22F B33Y C22C |
| A | GB 2 095 702 A (KENNAMETAL INC) 6 October 1982 (1982-10-06) * claims 1-65 * * abstract * | 1-15 | |
| A | US 2004/159978 A1 (NIELSEN JEFFREY A [US] ET AL) 19 August 2004 (2004-08-19) * paragraph [0035] - paragraph [0037] * * abstract * | 1-15 | |

-/--

The present search report has been drawn up for all claims

| Place of search | Date of completion of the search | Examiner |
|---|---|---|
| The Hague | 30 June 2022 | Godino Martinez, M |

EPO FORM 1503 03.82 (P04C01)

2

15

| | Europäisches Patentamt<br>European Patent Office<br>Office européen des brevets | **EUROPEAN SEARCH REPORT** | Application Number<br>**EP 22 15 5778** |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/185972 A1 (POETSCHKE JOHANNES [DE]) 20 June 2019 (2019-06-20)<br>* claims 1-10 *<br>* abstract * | 1-15 | |
| A | US 2020/307018 A1 (PRICHARD PAUL D [US]) 1 October 2020 (2020-10-01)<br>* paragraph [0007] *<br>* figure 1 *<br>* claims 1-22 * | 1-15 | |
| A | US 6 673 307 B1 (LINDHOLM MIKAEL [SE] ET AL) 6 January 2004 (2004-01-06)<br>* abstract *<br>* claims 1-21 * | 1-15 | |

TECHNICAL FIELDS SEARCHED (IPC)

The present search report has been drawn up for all claims

| Place of search | Date of completion of the search | Examiner |
|---|---|---|
| The Hague | 30 June 2022 | Godino Martinez, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 5778

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2022

| Patent document cited in search report | | Publication date | Patent family member(s) | | Publication date |
|---|---|---|---|---|---|
| US 2018221962 | A1 | 09-08-2018 | CN | 106141180 A | 23-11-2016 |
| | | | DE | 102016108507 A1 | 17-11-2016 |
| | | | US | 2016332236 A1 | 17-11-2016 |
| | | | US | 2018221962 A1 | 09-08-2018 |
| WO 2021154253 | A1 | 05-08-2021 | NONE | | |
| KR 102103376 | B1 | 24-04-2020 | NONE | | |
| US 2017072469 | A1 | 16-03-2017 | BR | 112016024706 A2 | 15-08-2017 |
| | | | CN | 106573298 A | 19-04-2017 |
| | | | EP | 3134222 A2 | 01-03-2017 |
| | | | JP | 6590833 B2 | 16-10-2019 |
| | | | JP | 2017519101 A | 13-07-2017 |
| | | | KR | 20160146729 A | 21-12-2016 |
| | | | RU | 2019113090 A | 06-09-2019 |
| | | | US | 2017072469 A1 | 16-03-2017 |
| | | | US | 2020360995 A1 | 19-11-2020 |
| | | | WO | 2015162206 A2 | 29-10-2015 |
| US 4610931 | A | 09-09-1986 | NONE | | |
| GB 2095702 | A | 06-10-1982 | AU | 539101 B2 | 13-09-1984 |
| | | | BE | 892634 A | 16-07-1982 |
| | | | CA | 1174438 A | 18-09-1984 |
| | | | CH | 653055 A5 | 13-12-1985 |
| | | | DE | 3211047 A1 | 25-11-1982 |
| | | | DK | 141182 A | 28-09-1982 |
| | | | ES | 271281 U | 16-08-1983 |
| | | | ES | 8308589 A1 | 01-09-1983 |
| | | | FI | 74304 B | 30-09-1987 |
| | | | FR | 2502613 A1 | 01-10-1982 |
| | | | GB | 2095702 A | 06-10-1982 |
| | | | IE | 52544 B1 | 09-12-1987 |
| | | | IL | 65359 A | 31-07-1985 |
| | | | IT | 1151523 B | 24-12-1986 |
| | | | JP | H0629475 B1 | 20-04-1994 |
| | | | JP | H0674462 B2 | 21-09-1994 |
| | | | JP | H01201436 A | 14-08-1989 |
| | | | JP | S57194239 A | 29-11-1982 |
| | | | LU | 84034 A1 | 08-07-1982 |
| | | | MX | 156716 A | 28-09-1988 |
| | | | MX | 170393 B | 19-08-1993 |
| | | | NL | 8201161 A | 18-10-1982 |
| | | | NO | 165628 B | 03-12-1990 |
| | | | NZ | 200007 A | 10-09-1986 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 22 15 5778

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2022

| Patent document cited in search report | | | Publication date | Patent family member(s) | | | Publication date |
|---|---|---|---|---|---|---|---|
| | | | | PT | 74670 | A | 01-04-1982 |
| | | | | SE | 459100 | B | 05-06-1989 |
| | | | | ZA | 821717 | B | 27-04-1983 |
| US | 2004159978 | A1 | 19-08-2004 | DE | 60307222 | T2 | 07-12-2006 |
| | | | | EP | 1442870 | A1 | 04-08-2004 |
| | | | | JP | 4250096 | B2 | 08-04-2009 |
| | | | | JP | 2004230895 | A | 19-08-2004 |
| | | | | JP | 2008006827 | A | 17-01-2008 |
| | | | | TW | I261029 | B | 01-09-2006 |
| | | | | US | 2004159978 | A1 | 19-08-2004 |
| US | 2019185972 | A1 | 20-06-2019 | DE | 102017125734 | A1 | 09-05-2019 |
| | | | | EP | 3479932 | A1 | 08-05-2019 |
| | | | | US | 2019185972 | A1 | 20-06-2019 |
| US | 2020307018 | A1 | 01-10-2020 | CN | 113573828 | A | 29-10-2021 |
| | | | | DE | 112020001416 | T5 | 09-12-2021 |
| | | | | US | 2020307018 | A1 | 01-10-2020 |
| | | | | WO | 2020198245 | A1 | 01-10-2020 |
| US | 6673307 | B1 | 06-01-2004 | AT | 240416 | T | 15-05-2003 |
| | | | | DE | 69907920 | T2 | 15-01-2004 |
| | | | | EP | 1105546 | A1 | 13-06-2001 |
| | | | | JP | 2002520485 | A | 09-07-2002 |
| | | | | US | 6673307 | B1 | 06-01-2004 |
| | | | | WO | 0003049 | A1 | 20-01-2000 |

EPO FORM P0459

For more details about this annex : see Official Journal of the European Patent Office, No. 12/82